# EUROPEAN PATENT APPLICATION

(11) **EP 3 048 432 A1**
(43) Date of publication of application: **27.07.2016**
(21) Application number: 15152136.6
(22) Date of filing: 22.01.2015
(51) Int. Cl.: G01F 1/684, F15D 1/02, G01F 15/00, F24F 13/24

(54) **Flow grid for flow sensor device**

(71) Applicant: Sensirion AG, 8712 Stäfa (CH)
(72) Inventor: Zipkes, Christoph, 8712 Stäfa (CH)
(74) Representative: Strässle, Simon

(57) **Abstract**

Flow sensor device (1) comprising a housing (10) with a flow channel (11) following a central flow line (N) for a fluid flow. The device (1) comprises at least one flow sensor element (12) and at least one flow grid (2), wherein the flow sensor element (12) is accommodated in the housing (10). The flow grid (2) is arranged upstream of the flow sensor element (12) and extends from a grid center (21) on the central flow line (N) in a radial direction (R) substantially transversely to the central flow line (N). The flow grid (2) is a single-piece plate element with a plurality of openings (22), wherein opening diameters (220) of the openings (22) range from 50 micrometers to 1 millimeter. Moreover, the present invention relates to such a flow grid (2) and to a method of production thereof.

## Description

### TECHNICAL FIELD

The present invention relates generally to a flow sensor device, more particularly to a flow sensor device with a flow grid, to such a flow grid, and to a method of production thereof.

### PRIOR ART

It is known to equip flow sensors with wire woven flow screens or grids for reducing noise and/or preserving a laminar flow profile over a larger flow range in flow tubes of flow sensors. Typically, the flow grids are wire meshes cut into a shape that fits the cross-sectional profile of the flow tube. The flow screens are placed upstream of the flow sensor in order to achieve the desired effects.

Loose wires from the edge of the woven and cut flow grid can, however, break free and cause problems of contamination in the sensor application when conveyed with the fluid. This is particularly relevant when it comes to patient safety. Moreover, common meshes can distort a laminar velocity profile into an undesired substantially rectangular shape velocity profile. Also, it is difficult - if not impossible - to achieve predefined mesh shapes by weaving techniques. Moreover, woven flow screens have a tendency to sag if drained by the fluid.

### SUMMARY OF THE INVENTION

Therefore, it is an object of the present invention to provide a flow sensor with an improved flow grid that overcomes the aforementioned disadvantages. Moreover, a flow grid for flow sensors shall be provided that allows for improved flow profile conditioning.

This object is achieved by a flow sensor according to claim 1. Accordingly, it is suggested to use a flow sensor device comprising a housing with a flow channel for a fluid flow following a central flow line, at least one flow sensor element, and at least one flow grid, wherein the flow sensor element is accommodated in the housing, and wherein the flow grid is arranged upstream of the flow sensor element and extends from a grid center on the central flow line in a radial direction substantially transversely to the central flow line. According to invention, the flow grid is a single-piece plate element with a plurality of openings, wherein opening diameters of the openings range from 50 micrometers to 1 millimeter, preferably 75 micrometers to 500 micrometers or 100 micrometers to 200 micrometers.

The invention is based on the insight that flow screens with micrometer openings for flow sensor devices may be etched plate elements. By means of etching, a convenient production of such single-piece flow grids is possible. One can easily adjust, according to specific requirements, number, arrangement, shape, size, and structure of the openings. It is possible to change these parameters over the flow grid area such that a non-trivial opening-ratio in radial or circumferential direction occurs.

The fluid may be a gas, a liquid or a mixture thereof.

The single-piece element flow grid, *i.e.* the flow screen, may be an etched flow grid. Such a flow grid is highly precise and inexpensive in production. Moreover, such a single-piece flow grid is robust and easy to mount or exchange; also, cleanliness is improved and particle contamination suppressed.

In some embodiments, an opening-ratio of the flow grid varies in radial and/or circumferential direction. The term "opening-ratio" refers to the ratio of the surface of the flow grid covered by openings per unit area; accordingly, it is a measure of how many and/or how large openings are provided per unit area of the flow grid. The opening-ratio describes the ease with which the fluid can move through the flow grid. More and/or larger openings in a unit area allow, at least in a laminar flow regime, passage of more fluid per time unit at constant pressure difference over the grid. The unit area may be chosen such that at least one opening, preferably multiple openings are included in the unit area. An opening-ratio of 0.5 means that 1 part of 2 parts of the unit area is covered by webs while the 1 part is covered by the openings. That the opening-ratio varies in radial and/or circumferential direction over the flow grid means that the opening-ratio may increase or decrease, at least section wise, in radial and/or circumferential direction. I.e. the opening ration may follow any non-trivial function that may be determined by the specific measurement setup. The change of the opening-ratio depends on the measurement geometry. For example, if the sensor element arranged in the periphery of the flow channel, the opening-ratio may be smaller in the periphery region of the flow grid and increase toward the grid center. Depending on the measurement geometry, there may be spatial variation of the opening-ratio that corrects for an unfavorable inlet flow distribution. It may thus be that the opening ratio is smaller on one side of the gird center or close to the grid center. The term "varies" is therefore to be understood that the opening-ratio changes, preferably by 5% to 500%, such as to optimize the flow profile at the measurement point, *i.e.* at the position of the mass flow sensor.

Accordingly, in some embodiments, the flow grid is structured such that fluid flowing on a path along a flow line may pass easier through the grid than fluid flowing on another path along another flow line. Accordingly, a conditioning of the velocity profile occurs. This may be achieved by changing diameters or shapes of openings or numbers of openings per unit area (*i.e.* the opening density) as a function of radial distance from the flow grid center or in dependence of angular position. For example, in the center, the openings may be larger than in the peripheral region of flow grid while a width of the webs connecting two openings remains constant.

Generally, a width of the webs may be as small as half the material thickness of the flow grid.

In some embodiments, said openings are arranged in a square lattice in other embodiments in a hexagonal lattice. Preferably, the openings are shaped an arranged such that the flow grid forms a honeycomb structure.

In some embodiments, said openings are arranged along lines, the lines being preferably concentric closed lines around the grid center of the flow grid. Preferably, the closed lines are round, particularly circles or ellipses. Openings may also be arranged along open lines, *e.g.* such as to follow a spiraling line starting from the grid center and ending close to the periphery edge of the grid or such as radially extending lines.

The openings are preferably uniformly distributed along the respective line.

Preferably, radially nearest neighboring openings are phase shifted with respect to one another such as to provide a flow grid that acts independent of its angular orientation in the flow sensor device. The term "phase shifted" refers to an arrangement where a radially inner opening's centroid is not lying on the straight line connecting the radially outer opening's centroid with the grid center, the radially inner and outer line being the nearest neighboring openings.

Here, it is also conceivable to have next nearest neighboring openings, or even more distanced openings, phase shifted with respect to one another such that, in effect, the velocity profile downstream of the flow grid is independent of the latter's angular orientation in the device.

In some embodiments, a distance between radially and/or circumferentially nearest neighboring openings decreases from the grid center radially outwardly or inwardly. Thereby, a flow grid with a radially dependent opening-ratio is achieved.

In some embodiments, in the alternative or additionally to the above-discussed arrangements, the opening diameters and/or shapes of the openings in the flow grid decrease or change at least stepwise, preferably continuously, from the grid center to a periphery edge of the flow grid.

Other lattices or arrangements of the openings and/or opening radii distributions may be realized. In effect, the different arrangements may be optimized for a desired flow profile conditioning, for a desired pressure drop, for noise or turbulence suppression or reduction, or for other purposes.

The velocity profile conditioning may advantageously be used for correcting application dependent inlet conditions. Accordingly, by means of the flow grid, the flow sensor device may be adapted to a specific application.

Accordingly, edged flow grids with specific geometries for the region of flow laminarization and/or for easy fixation in the housing are suggested.

In some embodiments, the laminarization region has a radial dependent opening-ratio to shape specific velocity profiles, or to better correct for specific inlet conditions.

In some embodiments, webs connecting two openings have a width of 50 micrometers to 250 micrometers, preferably of 75 micrometers to 100 micrometers. Preferably, the flow grid comprises so many openings that all the webs also do have a micrometer width; preferably, all the webs do have substantially the same width. The webs may run in radial or in circumferential direction or in a direction therebetween.

In some embodiments, the flow grid has a thickness ranging from 50 micrometers to 250 micrometers, preferably of 75 micrometers to 100 micrometers. Accordingly, metal or alloy sheets may be etched by means of known etching techniques. Therefore, in some embodiments, the flow grid is made of a metal sheet or an alloy sheet material. This allows for a simple, robust, and inexpensive manufacturing process.

Generally, the flow grid may have the shape of the cross section of the flow tube or channel. In some preferred embodiments, the flow grid has a circular shape with a diameter of preferably 4 millimeters to 30 millimeters, preferably 10 millimeters. Here, the term "grid center" is to be understood as the center of the circle. In other embodiments, the grid center is the geometric center, *i.e*. the centroid, of the flow grid surface (the material thickness of the plate element may be neglected).

In some embodiments, a circumferential extensions of the openings, the openings having substantially the same radial distance from the grid center, are substantially equal to their radial extension.

In some embodiments of the flow grid, a fixation region optimized for better mechanical fixation may be provided. The fixation region may be designed such as to allow different processes such as inductively heated embedding or ultrasonic welding. The structure of the fixation region can be further improved with double-side etched structures.

The fixation region may be a region up to 1 millimeter from the periphery edge of the grid, said fixation region being provided with a plurality of oblong, preferably substantially rectangular connecting openings for connecting the flow grid to the housing. The connecting openings are shaped, sized, and arranged for fastening the flow grid to the housing.

In some embodiments, the housing may be made from thermoplastics. Accordingly, the flow grid may be fastened to the housing by means of welding process, in particular by means of ultrasonic welding techniques. Accordingly, the connecting openings may be shaped and structured accordingly. Other techniques such as inductively heated embedding may be used for installing the grid in the channel. By means of these connecting openings, the assembly process may be improved.

In some preferred embodiments, the connecting openings are etched close to periphery edge, preferably from both sides of the plate element, wherein the opening etched from one side is larger than the opening etched for the opposing side. Accordingly, the connecting opening may be provided with a step in axial direction, which allows for a secure form fit connection between housing and flow grid.

Particularly preferred are embodiments, where the flow tube or channel exhibits an axial step as a stop for the channel diameter sized flow grid. Once the grid bears against the stop, the grid may contact the step in the region of the connecting openings. Then, thermoplastic material may be used, preferably by applying a liquefaction process, for creating a form fit between the grid surface facing in the same direction as the stop surface. In order to avoid excess material to protrude over said opposing grid surface, the connecting openings may be provided with the axial step.

In some embodiments, the connecting openings have their lengthwise direction alternatingly along the radial direction and the circumferential direction of the flow grid. This further secures the connection between grid and housing as the form fit is improved.

In some embodiments, at least part or all the connection openings may remove a part of the periphery edge, *i.e.* these connection openings are formed as recesses on the periphery edge of the grid and extending radially toward the grid center.

In some embodiments of the flow sensor device, at least one additional flow grid is arranged downstream of the flow sensor element. This is particularly advantageous if a flow sensor element is chose that may measure in both flow directions through the flow channel as then the flow sensor device may be used in both directions. Preferably, the upstream and the downstream flow grids are identical flow grids. It is, however, possible to have one specific flow grid on the one side of the flow sensor element, and another flow grid on the other side. Thereby, a flow sensor device with different flow profile conditioning effects (or any other flow grid effect) may be provided, wherein the different effects may simply be achieved by choosing the correct flow setting.

In some embodiments, at least one thermal finger element is arranged at a periphery edge of the flow grid for thermal connection of the flow grid to a thermal source for keeping the flow grid at a predefined temperature. By means of this thermal connection, the temperature control of the flow grid is possible. As the flow grid is a single-piece element, preferably from a good thermal conductor such as a metal, the fluid flow may be thermally conditioned before reaching the flow sensor element. The thermal source may be a heater element outside the flow channel. The finger element may be a lug with a length of 2 millimeters to 20 millimeters and may have width of 2 millimeters to 10 millimeters. In order to further improve the thermal conductivity of the flow grid, the latter may be coated or otherwise treated.

In some embodiments, the flow grid is a single-piece element produced by an etching technique, preferably by etching, at least partially, from both plate sides.

It is a further object of the present invention to provide a flow grid as described above, which may be used for equipping a flow tube of a flow sensor device.

This object is achieved by a flow grid for a flow sensor device, the flow grid extending from a grid center in a radial direction substantially transversely to the central flow line, wherein the flow grid is a single-piece plate element with a plurality of openings with opening diameters ranging from 50 micrometers to 1000 micrometers, wherein, preferably, an opening-ratio of the flow grid varies in radial direction. By means of such a flow grid, all the advantageous effects as mentioned above may be achieved in a flow sensor device.

In some embodiments, the flow grid may have webs connecting two openings have a width of 50 micrometers to 250 micrometers, preferably of 75 micrometers to 150 micrometers or 100 micrometers. The flow grid may have a thickness ranging from 50 micrometers to 250 micrometers, preferably of 75 micrometers to 100 micrometers. The flow grid may be made of a metal sheet or an alloy sheet material. The flow grid may have a circular or an elliptic shape with a diameter of preferably 4 millimeters to 30 millimeters, in particular 10 millimeters.

In some embodiments of the flow grid, the openings are arranged in a square lattice or in a hexagonal lattice. Alternatively, said openings may be arranged along concentric closed lines around the grid center of the flow grid, the closed lines being preferably circles or ellipses, wherein, preferably, the openings are uniformly distributed along each closed line, wherein openings of nearest neighboring closed lines are preferably phase shifted with respect to one another and/or wherein a distance between nearest neighboring closed lines decreases from the grid center radially outwardly. All the flow grid features as discussed herein in connection with the flow sensor device may also be combined in individually or in groups to the flow grid as discussed here.

The present invention also relates to a method of producing a flow grid as described herein, wherein the flow grid is a single-piece plate element with a plurality of openings with diameters ranging from 50 micrometers or 100 micrometers to 1000 micrometers, the method comprising the steps of:
(a) providing a plate element, the plate element being preferably a metal sheet or an alloy sheet; and
(b) etching the openings into said plate element such as to produce the flow grid.

The etching process may be a conventional one.

In some embodiments of the method, the plate element is at least partially etched from both plate sides, *e.g.* for producing steps or openings with minimal diameters. An arrangement of openings may be etched into the plate element such that an opening diameter and/or a number of openings per unit area of the flow grid increases or decreases from a periphery edge of the flow grid toward the grid center.

With the etched flow grids according to invention partial decay of the flow grid does not occur since the flow grid is made out of a single-piece metal sheet material. The velocity profile can be shaped to a better match of a laminar profile than with the wire woven mesh.

Problems of fixation of the flow grid in a plastic housing can be solved by allowing for special geometries in the part of the flow grid used for the fixation.

Handling of the flow grid in production is simplified because there are no sharp wire tips around the edge of the grid.

The embodiments described herein are illustrative of some of the applications of the principles of the present subject-matter. Numerous modifications and/or combinations of features that are individually disclosed may be made.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows in a cross-sectional view a simplified flow sensor device according to invention with a housing;
- Fig. 2: shows in a top view a first embodiment of a flow grid according to invention;
- Fig. 3: shows in a top view a second embodiment of a flow grid according to invention;
- Fig. 4: shows a detail of the edge region of Fig. 3;
- Fig. 5: shows in a top view a third embodiment of a flow grid according to invention;
- Fig. 6: shows a detail of the edge region of Fig. 5;
- Figs. 7-9: show in a cross-sectional view steps of a mounting procedure for installing a flow grid according to invention in the housing according to Fig. 1; and
- Fig. 10: shows a flow diagram of a method of production of a flow grid according to invention.

### DESCRIPTION OF PREFERRED EMBODIMENTS

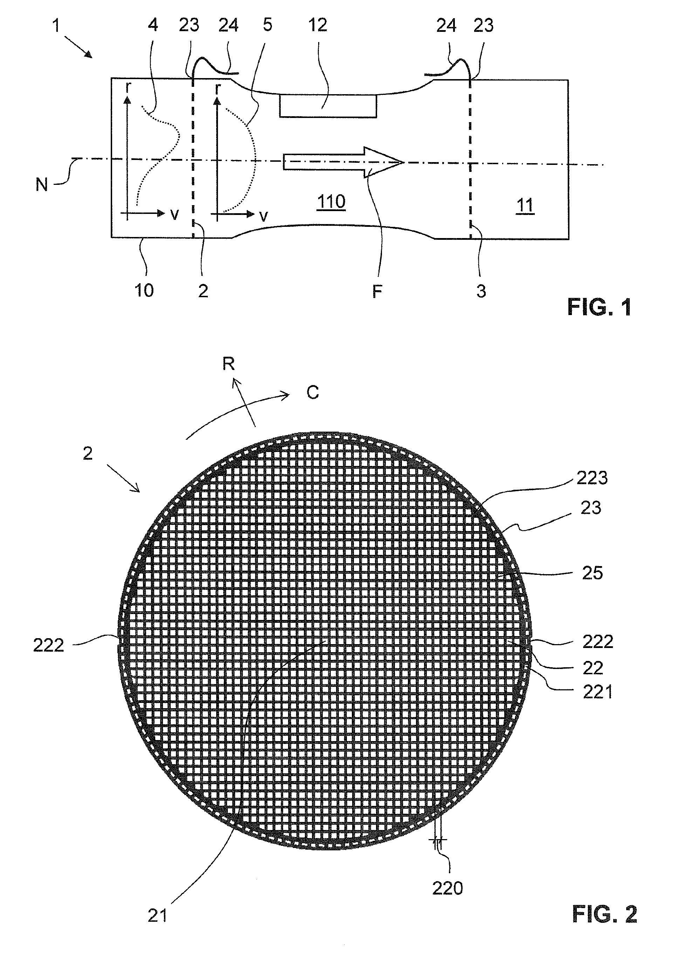

**Figure 1** schematically shows a flow sensor device 1 with a housing 10 accommodating a flow channel 11. The flow channel 11 has a central flow line N and a wall-mounted flow sensor element 12 is arranged in a radially restricted middle section 110 of the flow channel 11. A main flow direction F is indicated by an arrow. For simplicity, the flow channel 11 is shown as a straight channel with a substantially circular cross section. The central flow line N is exemplarily therefore given as a straight line running through the center point of any circular cross section of the channel 11. It is to be understood, that the housing 10 and flow channel 11 may have more complex shapes.

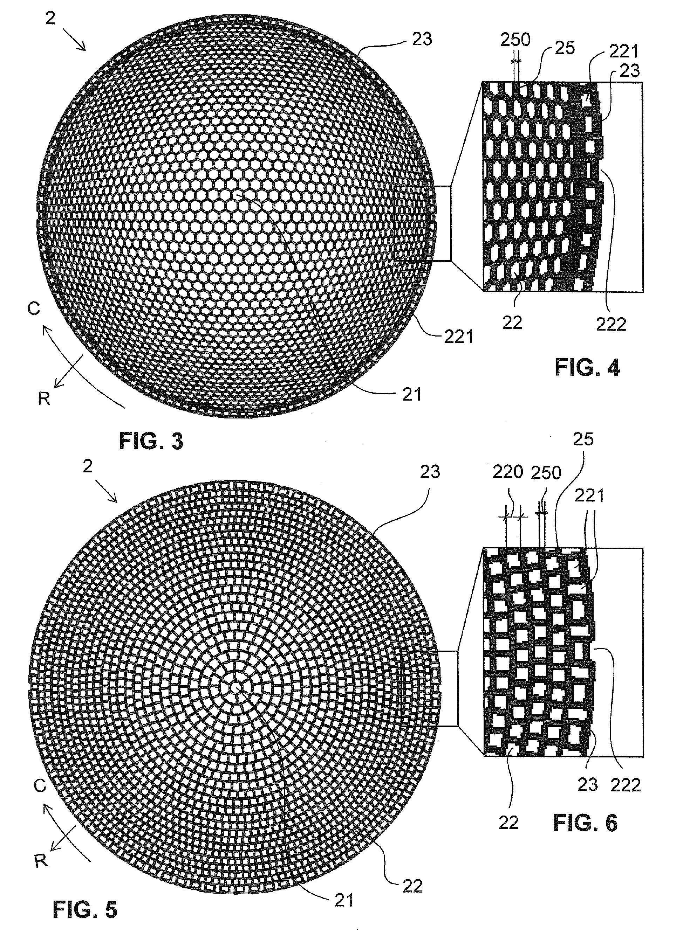

The housing 10 may be made from a thermoplastic material. The housing 10 provides all the necessary accommodation structures (not shown) for installment of the flow sensor element 12. Moreover, the housing 10 provides mounting structures (*cf.* Figs. 5 to 7) for fastening an etched flow grid 2 at an upstream position and an additional etched flow grid 3 at a downstream position of the flow sensor element 12.

The flow sensor element 12 may be a membrane based flow sensor element.

The flow grids 2, 3 are identical flow grids that are arranged in the flow channel 11, substantially transverse to the main flow direction F. The grids 2, 3 cover the entire cross section of the flow channel 11. Accordingly, a fluid, *e.g.* a gas composition in a combustion engine, being conveyed through the channel 11 along the main flow direction F is forced through the flow grids 2, 3. As the flow grids 2, 3 are identical elements, the device 1 may be used in both direction in the same application. It is, however, also conceivable the two flow grids 2, 3 are different and serve a specific function as set out below. This would then give the option of having a device 1 that is optimized for different situations depending on it orientation in the application.

The micrometer opening pattern of the upstream flow grid 2 causes a predefined conditioning of the flow profile of the fluid (*cf.* below for details of the pattern). In Fig. 1 to the left of grid 2, there is schematically shown an inlet velocity profile 4 depicted in a coordinate system with a spatial position r versus a flow velocity v (both in arbitrary units). To the right of the grid 2, there is schematically shown an outlet flow velocity profile 5 shown in the same coordinate system. The highly asymmetric flow profile 4 has been partially symmetrized by the flow grid 2 into a more symmetric profile 5. This may be achieved, *e.g.,* with the flow grid 2 according to Fig. 3 (*cf.* below). It is to be understood, that any specific flow conditioning may be achieved by providing the grid 2 with an appropriate opening pattern. Here, the position, shape, and size distribution of the openings 22 in the grid 2 are decisive. The radial opening-ratio may follow a non-trivial function for having a specific flow profile conditioning effect. Also, noise-reduction, or turbulence suppression may be achieved by a pattern depending on the fluid and the channel geometry.

Importantly, the flow grid 2 may be provided such that a flow velocity v of the fluid at the position of the flow sensor element 12 has a desired value. For example, if the fluid has an average flow velocity that is significantly higher than a maximum flow velocity appropriate for the flow sensor element 12, the profile 5 may be conditioned such that the velocity v in the radial outer region, where the wall-mounted flow sensor element 12 measures, is in a flow range that is acceptable to the flow sensor element 12 such that the latter measures with required sensitivity. Accordingly, the flow grid 2 may help to extend the applicability of the mass flow sensor device 1 having a specific flow sensor element 12. Accordingly, depending on the opening pattern and its radial opening-ratio, a higher sensitivity and/or a larger flow range may be possible for a given flow sensor element 12.

Moreover, the flow grid 2 shields the flow sensor element 12 from harmful contaminants being conveyed in the inlet fluid, and it may apply a predefined thermal conditioning to the fluid. For the latter purpose, the single-piece metal sheet flow grids 2, 3 have, at their periphery edge 23 a thermal finger element 24. This finger element 24 is preferably integral part of the single-piece grids 2, 3. For the purpose of thermal conditioning of the fluid, the finger element 24 is connected to a thermal source (not shown). By means of this thermal connection, the temperature control of the flow grids 2, 3 is possible via control of the thermal source.

In some embodiments, there may be arranged a plurality of such finger elements 24 distributed along the periphery edge 23 of the grids 2, 3.

**Figures 2** to **6** show top views of three different embodiments of the flow grid 2 according to the present invention, or details thereof, wherein the three embodiments are having three different opening patterns. The flow grid 2 according to all three embodiments has a circular shape and a material thickness of 50 micrometers to 100 micrometers. It is made from a stainless steel sheet using a standard etching process. A diameter of the flow grid 2 may be 10 millimeters. The periphery edge 23 extends along a circumferential direction C and describes a circle around a grid center 21. Moreover, the periphery edge 23 has two diametrically opposing connecting notches 222. A depth of the notches 222 as measured from the circle around the periphery edge 23 is 50 micrometers to 250 micrometers. These notches 222 break the rotational symmetry of the circular periphery edge 23 and serve for mounting and/or orienting purposes when the flow grid 2 is installed into the flow sensor device 1. A radial direction R points radially outwardly from the grid center 21 to the periphery edge 23.

**Figure 2** shows a first embodiment of the flow grid 2. The flow grid 2 according to the first embodiment comprises a plurality of square shaped openings 22, the openings 22 being uniformly distributed in a matrix arrangement, *i.e.* in straight lines and columns. An opening-ratio of the first embodiment as a function of radial position is therefore constant. Edges 220 of the square openings 22 may be 100 micrometers to 1000 micrometers long. Two nearest neighboring openings 22 are spaced over a web 25, the web 25 having a width 250 of about 75 micrometers to 100 micrometers. All the webs 25 together form a single-piece net- or grid-like structure within the periphery edge 23 that serves as the flow grid.

A ring-shaped fixation region close to the periphery edge 23 is provided with a sequence or circumferentially distributed oblong connecting openings 221. The connecting openings 221 line up with their lengthwise extension substantially along the C-direction. Between the openings 22 and the connecting openings 221 is provided a solid transition region 223. The transition region 223 may have a width of about 150 micrometers to 200 micrometers or may be substantially equal to the length of the edge 220 of the openings 22.

The connecting openings 221 positioned radially inwardly of the notches 222 may have a reduced radial extension such that the transition region 223 is not thinner due to the notches 222.

**Figure 3** shows a second embodiment of the flow grid 2. The flow grid 2 according to the second embodiment differs from the first embodiment in opening pattern; the openings 22 have a different shape, and a varying shape and size distribution over the grid 2. Instead of a square shape the openings 22 have a hexagonal shape. A diameter of the hexagonal openings 22 is decreasing with increasing radial distance from the grid center 21. As can be seen from Fig. 3, a radial extension of the hexagonal openings 22 is decreasing more pronounced in radial direction R than a circumferential extension of the openings 22. The radial extension of the hexagonal openings 22 close to the periphery edge 23 is 10% to 25% of the radial extension of the openings 22 close to the center 21. The circumferential extension of the hexagonal openings 22 close to the periphery edge 23 is 30% to 50% of the circumferential extension of the openings 22 close to the center 21. Accordingly, openings 22 close to the center 21 are regular hexagons while openings 22 close to the periphery edge 23 are distorted hexagons with contracted radial extension.

**Figure 4** shows a detail of Fig. 3. The connecting openings 221 are shown with a radially contracted connecting opening 221 next to the notch 222. Moreover, webs 25 with widths 250 are indicated.

**Figure 5** shows a third embodiment of the flow grid 2. The flow grid 2 according to the second embodiment differs from the first embodiment in that the openings 22 do have yet another shape. Instead of a square shape, the openings 22 have the shape of annular sections. As can be seen from Fig. 5, the grid 2 is segmented by circumferential webs 25 into a plurality of concentric anuli with the annular section openings being uniformly distributed around the respective ring around the center 21 and spaced by a radial web 25. The radial and the circumferential webs 25 have substantially the same width 250. A radial extension of the openings 22 is substantially the same as their circumferential extension.

The radially nearest openings 22 are circumferentially shifted with respect to one another (phase shift, see above) such that the fluid conditioning effect of the flow grid 21 is independent of its angular position with respect to the wall-mounted flow sensor element *12* (*cf.* Fig. 1). This is advantageous in the mounting process as no extra care has to be paid on angular orientation. In this regard, the second embodiment according to Fig. 3 is also rather insensitive to the angular position while the first embodiment is more sensitive than the second.

**Figure 6** shows a detail of Fig. 5. From Fig. 6, the radially contracted connecting opening 221 next to the notch 222 is apparent. Moreover, radial and circumferential webs 25 with widths 250 and the circumferential edge 23 are shown. Figure 6 further includes the alternating orientation of the lengthwise direction of the oblong connecting opening 221 being oriented either along the radial or the circumferential direction C, R. Such alternating connecting opening pattern may also be applied to the other embodiments or vice versa.

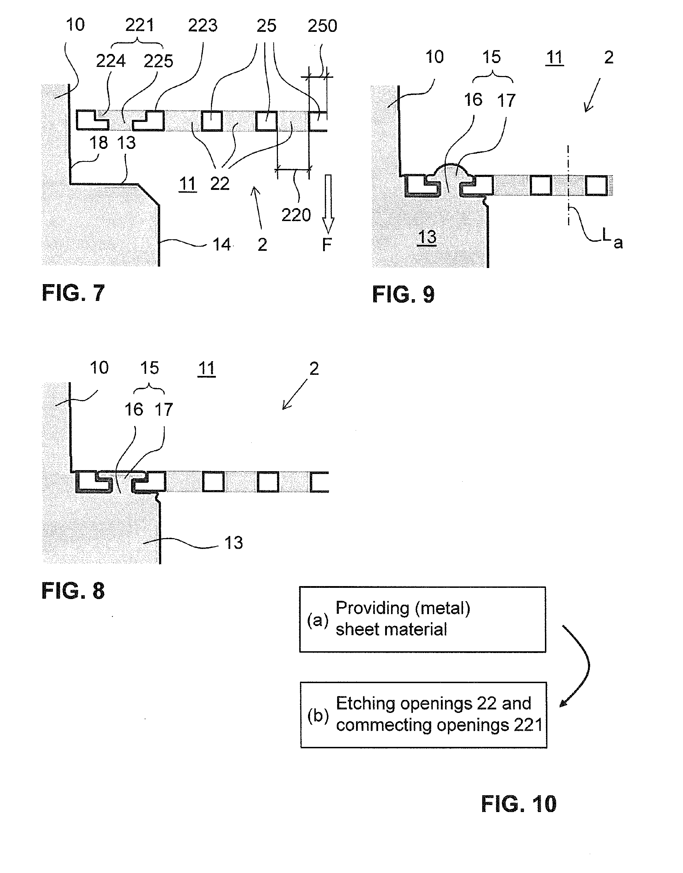

**Figures 7** to **9** show steps of a procedure of fastening the flow grid 2 to the housing 10 during assembly of the device 1.

**Figure 7** shows the grid 2 inserted in channel 11 of the housing 10. The main flow direction F is in the downward direction in Fig. 7.

Figure 7 shows a detail of the grid 2, namely a cross-section through a radial outer part of the grid 2. One can see the webs 25 with widths 250; in-between the webs 25 are the openings 22 with widths 220, and, to the left, the structured connecting opening 221.

The connecting opening 221 is etched from both sides such that a first opening section 224 is followed by is narrower second opening section 225. Accordingly, the connecting opening 221 has a radial step with respect to its opening axis Lₐ (*cf.* Fig. 9).

The housing 10 comprises also a step 13 that serves as a stop for the flow grid 2. The step 13 is provided on the inner wall of the housing 10. The step 13 divides said inner wall into a first inner wall section 18 and second inner wall section 14, the second inner wall 14 section being substantially parallel to first inner wall section 18 and radially shifted into the channel 11 with respect to the first inner wall section 18. Accordingly, the flow grid 2 is inserted into channel 11 such as to bear against step 13. In order to fixedly fasten the grid 2 to housing 10, some material of the step 13 may be liquefied by means of heat treatment, *e.g*. inductive heat embedding, or ultrasonic welding such that a cylinder section 16 is formed from the step material that extends through the connecting opening 221, wherein a head section 17 is produced which rest on the radial step 13 in the connecting opening 221. The cylinder section 16 and the head section 17 form the connection section 15.

It is to be understood, that the grid 2 may also have an extra web-structure on its surface facing the step 13 such as to define a reduced contact area for the grid 2 to contact the step 13. This provides improved transmission conditions for guiding ultrasonic waves for liquefaction of the step material into the step 13 during the embedding process.

Each or only a part of the connecting openings 221 may be used for establishing such a connection between grid 2 and housing 10.

The result is depicted in **Figures 8** and **9****.** The difference between Figs. 8 and 9 is that in Fig. 8, the head section 17 is flattened such that it does not protrude over the grid surface into channel 11. This is advantageous as fluid flow distortions are minimized. Figure 9 shows a more robust connection with a larger head section 17 that protrudes through the connecting opening 221 into channel 11.

**Figure 10** shows a flow diagram of a method of production according to invention for manufacturing a flow grid 2 as described above. In a first step (a) plate element from a metal sheet is provided. The plate element may have a material thickness of 50 micrometers to 100 micrometers; it may further have a circular shape with a diameter of 10 millimeters. In a consecutive step (b) a plurality of openings 22 with diameters ranging from 100 micrometers to 1 millimeter according to a predefined pattern are etched into the plate element by means of a standard etching procedure. The etching may be done from one side or from both sides. The openings 22 may be arranged according to a pattern as shown in any of the embodiments described above.

Preferably, the plate element is etched from both plate element sides *(i.e.* from above and below in Fig. 7), wherein the connecting openings are provided with a step as described above and shown in Fig. 7.

As a result a robust, inexpensive, and for the specific application customized flow grids 2 may be produced.

**LIST OF REFERENCE SIGNS**

| | | | |
|---|---|---|---|
| 1 | flow sensor device | 222 | connecting notch |
| 10 | housing | 223 | transition region |
| 11 | flow channel | 224 | first section of 221 |
| 110 | restricted middle section of 11 | 225 | second section of 221 |
| | | 23 | periphery edge |
| 12 | flow sensor element | 24 | thermal finger element |
| 13 | step in 10 | 25 | web |
| 14 | second inner wall section of 10 | 250 | width of 25 |
| 15 | connecting section of 13 | 3 | additional flow grid |
| 16 | cylinder section of 15 | | |
| 17 | head section of 15 | 4 | inlet flow velocity profile |
| 18 | first inner wall section of 10 | 5 | conditioned outlet flow velocity profile |
| 2 | flow grid | | |
| 21 | grid center | C | circumferential direction |
| 22 | opening | Lₐ | axis of 22 |
| 220 | diameter of 22 | N | central flow line |
| 221 | connecting opening | R | radial direction |

## Claims

1. Flow sensor device (1) comprising a housing (10) with a flow channel (11) for a fluid flow following a central flow line (N), at least one flow sensor element (12), and at least one flow grid (2), wherein the flow sensor element (12) is accommodated in the housing (10), and wherein the flow grid (2) is arranged upstream of the flow sensor element (12) and extends from a grid center (21) on the central flow line (N) in a radial direction (R) substantially transversely to the central flow line (N), **characterized in that** the flow grid (2) is a single-piece plate element with a plurality of openings (22), wherein opening diameters (220) of the openings (22) range from 50 micrometers to 1 millimeter.

2. Flow sensor device (1) according to claim 1, wherein an opening-ratio varies in radial direction (R) and/or in the circumferential direction (C) over the flow grid (2), wherein, preferably, the opening-ratio increases or decreases in the radial direction (R) at least section wise over the flow grid (2).

3. Flow sensor device (1) according to claim 1 or 2, wherein said openings (22) are arranged in:
a square lattice, or
a hexagonal lattice, wherein the openings (22) are preferably shaped an arranged such that the flow grid (2) forms a honeycomb structure.

4. Flow sensor device (1) according to claim 1 or 2, wherein said openings (22) are arranged along lines, the lines being preferably concentric closed lines around the grid center (21), wherein, preferably, the openings (22) are uniformly distributed along each line, wherein at least some radially neighboring openings (22) are phase shifted with respect to one another such as to provide a flow grid (2) that acts independent of its angular orientation in the flow sensor device (1) and/or wherein the opening-ratio decreases from the grid center (21) radially outwardly, wherein, preferably, said closed lines are ellipses or circles.

5. Flow sensor device (1) according to any one of the preceding claims, wherein the opening diameters (220) of the openings (22) in the flow grid (2) decrease at least stepwise, preferably continuously, from the grid center (21) to a periphery edge (23) of the flow grid (2).

6. Flow sensor device (1) according to any one of the preceding claims, wherein webs (25) connecting two openings (22) have a width of 50 micrometers to 250 micrometers, preferably of 75 micrometers to 100 micrometers, and/or wherein the flow grid (2) has a material thickness ranging from 50 micrometers to 250 micrometers, preferably of 75 micrometers to 100 micrometers, and/or wherein the flow grid (2) is made of a metal sheet or an alloy sheet material, and/or wherein the flow grid (2) has a circular shape with a diameter of preferably 4 millimeters to 30 millimeters.

7. Flow sensor device (1) according to any one of the preceding claims, wherein circumferential extensions of the openings (22), the openings (22) having substantially the same radial distance from the grid center (21), are substantially equal to the radial extensions of said openings (22).

8. Flow sensor device (1) according to any one of the preceding claims, wherein a plurality of oblong connecting openings (221) for connecting the flow grid (2) to the housing (1) are arranged along a periphery edge (23) of the flow grid (2), wherein, preferably, the connecting openings (221) have at least one step (222) along their axis (Lₐ) and/or wherein, preferably, the connecting openings (221) have their lengthwise direction alternatingly along the radial direction (R) and the circumferential direction (C) of the flow grid (2).

9. Flow sensor device (1) according to any one of the preceding claims, wherein at least one additional flow grid (3) is arranged downstream of the flow sensor element (12), wherein, preferably, the upstream and the downstream flow grids (2,3) are identical flow grids (2,3).

10. Flow sensor device (1) according to any one of the preceding claims, wherein at least one thermal finger element (24) is arranged at a periphery edge (23) of the flow grid (2) for thermal connection of the flow grid (2) to a thermal source for keeping the flow grid (2) at a predefined temperature.

11. Flow sensor device (1) according to any one of the preceding claims, wherein the flow grid (2) is a single-piece element produced by an etching technique, preferably by etching, at least partially, from both element sides.

12. Flow grid (2) for a flow sensor device (1) according to any one of the preceding claims, wherein the flow grid (2) extends from a grid center (21) in a radial direction (R) substantially transversely to the central flow line (N), **characterized in that** the flow grid (2) is a single-piece plate element with a plurality of openings (22) with opening diameters (220) ranging from 50 micrometers to 1 millimeter, wherein, preferably, an opening-ratio of the flow grid (2) varies in radial direction (R) over the flow grid (2).

13. Flow grid (2) according to the preceding claim, wherein the openings (22) are arranged in a square lattice, or in a hexagonal lattice,
or wherein said openings (22) are arranged along concentric closed lines around the grid center (21), the closed lines being preferably circles or ellipses, wherein, preferably, the openings (22) are uniformly distributed along each line, wherein openings (22) of nearest neighboring lines are preferably phase shifted with respect to one another and/or wherein a distance between nearest neighboring closed lines decreases from the grid center (21) radially outwardly.

14. Method of producing a flow grid (2) according to any one of the two preceding claims, wherein the flow grid (2) is a single-piece plate element with a plurality of openings (22) with diameters (220) ranging from 50 micrometers to 1 millimeter, the method comprising the steps of:
(a) providing a plate element, the plate element being preferably a metal sheet or an alloy sheet; and
(b) etching the openings (22) into said plate element such as to produce the flow grid (2).

15. Method according to the preceding claim, wherein the plate element is at least partially etched from both plate sides, and/or wherein an arrangement of openings (22) is etched into the plate element such that an opening diameter (220) and/or a number of openings (22) per unit area of the flow grid (2) increases from a periphery edge (23) of the flow grid (2) toward the grid center (21).
